Europäisches Patentamt

European Patent Office

Office européen des brevets

(11) Publication number: 0 114 753
A1

# (12) EUROPEAN PATENT APPLICATION

(21) Application number: 84300347.6

(22) Date of filing: 20.01.84

(51) Int. Cl.³: A 01 J 25/00
A 23 C 19/024

(30) Priority: 21.01.83 GB 8301619

(43) Date of publication of application:
01.08.84 Bulletin 84/31

(84) Designated Contracting States:
DE FR NL

(71) Applicant: MILK MARKETING BOARD

Thames Ditton Surrey KT7 OEL(GB)

(72) Inventor: Coton, Stanley Gordon
Hythe Lodge Knoll Road
Dorking Surrey(GB)

(74) Representative: Ayers, Martyn Lewis Stanley et al,
J.A. KEMP & CO. 14 South Square Gray's Inn
London, WC1R 5EU(GB)

(54) Improvements relating to cheese-making.

(57) In order to provide optimum conditions for coagulation, the coagulant is introduced into a tube and a desired temperature profile established during a period of coagulation. In order to prevent relative movement between the tube and the coagulaum during coagulation, the tube is constituted by plastic sheet from a roll 12 which is temporarily formed into a tube 15 which is subsequently stripped from the coagulated product and disposed of.

EP 0 114 753 A1

- 1 -

DESCRIPTION

TITLE:  IMPROVEMENTS RELATING TO CHEESE-MAKING

THIS INVENTION relates to cheese-making and is particularly concerned with a new process and apparatus for coagulating the protein in milk which is one of the essential steps in cheese-making.

The term "milk" as used throughout this specification and claims is intended to be interpreted broadly as including, inter alia, milk from any lactating animal and ultra-filtrated milk.

Cheese-making essentially consists of coagulating the protein in milk to form a coagulum (curd) which is normally brought about by the introduction of an enzyme such as rennet but may also be brought about by the action of acid either added or produced in the milk by the growth of lactic acid producing bacteria.  It is quite usual practice also to use a mixture of an enzyme and acid. During the formation of the protein coagulum a large proportion of the butter-fat content of the milk is entrained.  After coagulation the curd is cut into pieces and, by a process of syneresis, whey is released from the cut coagulum resulting in a mixture of curds and whey. The initial composition of the milk, its treatment during coagulation and most importantly the processing of the curds are the principal means by which a very wide range of cheeses is produced.  The formation of an initial coagulum by the action of enzyme and/or acid is however an essential initial step in the manufacture of all cheese.

Considerable attention has been given in recent years to the development of continuous processing to replace batch processing traditionally used in cheese-making.  A large number of processes have been proposed for continuous coagulation of milk, many of them involving passing renneted milk through tubes, usually made of a plastics material.  Coagulation of renneted milk requires a temperature above 10°C and most processes involve holding the milk at a temperature of about 25 to 35°C while coagulation occurs. Thus, in the case of continuous processing involving the use of tubes, the tubes have been immersed in warm water and renneted milk pumped through the tubes so that the coagulum could be collected from the tubes and passed to the syneresis and draining stage.

Although many continuous coagulating processes have been proposed which involve the use of warmed tubes, none of the existing processes are entirely satisfactory for continuous coagulation on a commercial scale. This is because existing processes suffer from one or both of the following defects.

The first defect is that the coagulum adheres to the inner walls of the tube. This gives rise to several disadvantages, namely that it reduces the yield of coagulum that can be readily recovered, that it reduces the period of time for which the continuous process can be operated without shutting down for cleaning and that it adversely affects the fluid flow pattern through the tube.

The second defect is that, whether or not the interior of the tube is partly blocked by coagulum adhering to the walls, the fluid flow patterns frequently bring about undesirable physical characteristics of the coagulum. For example, syneresis may set in too early or for other reasons the coagulum may collapse so that it cannot be cut into small pieces for syneresis and draining in the usual way.

A frequent consequence of the defects noted above is that there is a greater loss of protein and fat into the whey than from good conventional cheese-making processes. These additional losses are economically undesirable and militate against the adoption of continuous curd making processes.

We have now found that the various problems resulting from existing proposals for the coagulation of milk in heated plastics tubes can be substantially overcome if the milk is maintained substantially stationary in the tube during the coagulation period.

According to the present invention, there is provided apparatus for processing a coagulating dairy product comprising means for advancing a body of the dairy product during coagulation thereof, means for temporarily encapsulating the moving body of product for a predetermined period whereby coagulation can proceed without relative movement of the coagulating product and the encapsulating material, means for supplying disposable sheet material as the encapsulating material, means for enveloping the body of material in the sheet for the duration of the period and means downstream of the enveloping means for removing and disposing of the sheet after the predetermined period.

The invention further provides process for the continuous coagulation of protein in milk which comprises introducing a liquid milk containing a protein coagulant for coagulating milk protein into a moving tube, producing a desired temperature profile in the milk by bringing the milk into heat-exchange contact with a heat-exchange medium if necessary and then recovering coagulated protein from the tube, there being substantially no movement of the contents of the tube relative to the walls of the tube during the coagulation period.

In the existing continuous processes, many attempts have been made to avoid the problems mentioned above by the use of particular plastics materials that line the internal walls of the tube and to control the turbulence etc. during fluid flow but such modifications merely add to the expense of the coagulation without completely overcoming the problems. One procedure that characterises all of the existing methods is that the tube remains stationary immersed in warm water and the renneted milk is passed through the tube. In our procedure, the milk remains stationary in the tube for a sufficient period of time to permit coagulation to occur.

The nature of the milk to be coagulated and the nature of the protein coagulating agents used in our process are the same as those used in existing coagulation processes. Thus, the milk can be from any lactating animals, normally cow or goat or sheep and the coagulating agent will normally be rennet. As in traditional procedures, the milk can be renneted to a conventional extent, e.g. 22 ml standard rennet (15,000 units/ml) per 100 litres milk and the milk can also be inoculated with a conventional cheese starter organism, e.g. S.lactis or L.cremoris.

Although existing proposals for tube coagulation have normally required the renneting of whole milk, since there is no movement of the milk in the tube during coagulation, it is not necessary to take account of fluid flow patterns during coagulation. This means that our process can use ultra-filtered milk from which substantial quantities of the water have been removed. This gives substantial economic advantages to our process since the volume of curd that has to be processed is inversely proportional to the ultra-filtration concentration factor. Procedures are now available for removing by ultra-filtration from whole milk proportions of water such that the ultra-filtered product will have its volume reduced to about 20% of the original while still retaining effectively all of the fat and protein originally present.

One way in which the principle of our invention could be put into effect is to use encapsulating techniques that are already developed for the packaging of foodstuffs. This existing technology can be modified very easily to enable our invention to be put into practice. Plastics packaging material can be used in continuous sheet form. The sheet is first deformed to give a trough or valley along its longitudinal axis, e.g. of U or V configuration and the milk containing the coagulating agent and any other additives required is introduced into the trough. The two sides of the plastics packaging material are then brought together and sealed, so forming a tube containing the treated milk. This tube will normally be of circular cross-section but need not necessarily be circular and can be of any desired cross-section according to the equipment that is being used for filling and sealing the tube.

Once the treated milk has been sealed into the plastics tube, the plastics tube may be introduced into a heat-exchange medium, e.g. warm water or warm air. The filled plastics tube can then be moved through the heat-exchange medium, at a speed such that the desired residence time in the heat-exchange medium is obtained for coagulation to occur; for ultrafiltered milk this is normally of the order of 15 minutes. During this period in the heat-exchanger, it is the tube that is moving but there is no movement of the milk in the tube since there is no applied pressure at the filling end. Although the milk will usually be heated in the heat-exchanger to about 30-35$^{o}$C, it is not always essential to heat the milk and for certain cheeses, the necessary temperature profile for coagulation can be obtained at ambient temperature.

At the end of the coagulation period, the filled tube is removed from the heat-exchange medium and slit open along its longitudinal axis. Opening of the tube in this way permits the release from the tube of a continuous coagulum having the configuration of the tube. This continuous run of coagulum can then be cut into small peices and subjected to syneresis in the usual way.

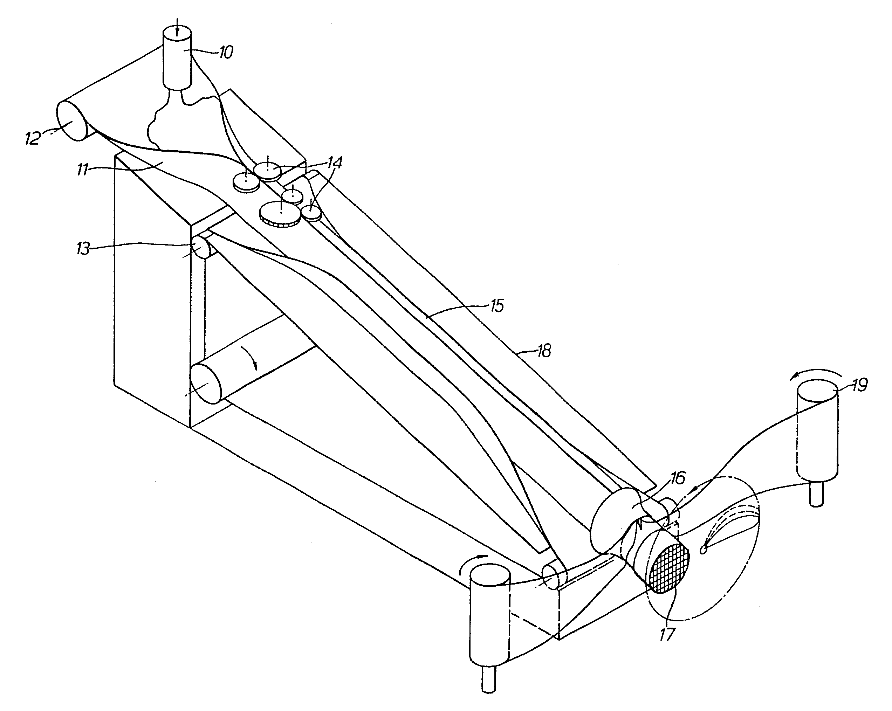

The accompanying drawing shows how the invention can be put into practice in this way. Treated milk from a reservoir (not shown) is fed continuously into the trough of a plastics sheet 11 which is supplied continuously from a roll 12 by means of a feed arrangement comprising an endless belt 18 which is disposed to follow a path which is triangular as viewed in elevation and driven by rollers such as 13. The moving plastics sheet containing the treated milk in the trough then passes through further rollers 14 where the sides of the plastic sheet are brought together and sealed to form a tube 15. According to the type of cheese being manufactured the tube 15, as it progresses may be subjected to a heat exchange treatment which can be provided by a liquid or air bath or liquid sprays. The tube 15 containing the coagulum passes through cutter 16 where the tube is slit longitudinally and opened out so releasing a continuous strip of coagulum of cross-section corresponding to that of the tube. The curd passes to a curd cutter 17 which may comprise any suitable arrangement for achieving the required 3 axes of cut required to form separate pieces of curd. For example it may comprise two sets of wires or blades at right angles to cut lengthwise of the direction of feed and a rotating or reciprocating cutter blade transversely of the direction feed. The coagulum cutting device 17 cuts the continuous strip of coagulum into pieces of a size suitable for syneresis and further processing. The waste plastics film is wound onto rollers 19.

Suitably, the tube may slant downwardly at an angle of, for example, about 10 degrees to the horizontal. Alternatively, the major central portion of the tube may be at or nearly horizontal with the inlet and outlet inclined at a greater angle than the central part, these end portions bending smoothly into the central portion of the tube. Where the upstream end portion is thus inclined, the milk may conveniently be introduced into the tube in the region where this portion merges with the main part of the tube.

In operation, the speed of the driving rollers is adjusted so that the milk will be maintained at coagulating temperature for the desired period of time, normally about 15 minutes for ultrafiltered milk and the rate of introduction of treated milk through tube 10 is also adjusted so that it matches the speed of the plastics material so that there is no movement of the treated milk in the tube during the coagulation process.

Other methods of introducing milk into the tube for coagulation are also possible. For example, a preformed tube can be concertinaed or coiled and the treated milk then introduced into the contertinaed or coiled tube at a rate which corresponds exactly to the rate of opening of the concertina shape or the rate of uncoiling of the coiled tube so that, again, the tube becomes filled with treated milk without there being any relative movement of the treated milk in the tube. When this embodiment is used, again the filled tube can be brought into heat-exchange contact with a heat-exchange medium so that coagulation occurs in the tube during a period when there is no relative movement of the treated milk in the tube. Since there is no relative movement of the treated milk in the tube during coagulation, the problems of the prior art arising from fluid flow in the tube are substantially avoided. Since the coagulum is recovered from the tube by slitting the tube open, rather than by extruding the coagulum from the tube in accordance with the previous methods, the difficulties resulting from coagulum adhering to the internal walls of the tube are substantially reduced and, in many cases substantially avoided.

The nature of the plastics material to be used for the construction of the tube will depend to a certain extent upon the exact methodology to be used. If our preferred procedure operating in accordance with the accompanying drawing is to be used, then clearly, plastics material that can be easily heat-sealed will be used. One of the various grades of polyethylene is a preferred material. If use is to be made of a concertinaed or coiled tube, then the question of heat-sealability is less important but physical characteristics will be of greater importance here to ensure that there is no cracking or lack of flexibility of the tube during the filling procedure. Polyethylene, polypropylene or polyvinyl choride are candidate materials. It is also possible, particularly when operating in accordance with the embodiment illustrated in the accompanying drawing, to use a composite plastics material where milk is brought into contact with an inner surface which will be selected for its lack of adhesion to the resulting coagulum, e.g. a cellulosic material, which is deposited on top of an impervious material, e.g. polyethylene which will provide a strong outer coating to the eventual tube.

The following Example is given to illustrate the invention.

### E X A M P L E

Whole milk was subjected to ultra-filtration to reduce its volume to 20% of the original volume. This was then treated by inoculation with a highly concentrated cheese starter organism S.lactis until the pH was reduced to 6.0. The milk was then treated at about $31^{\circ}C$ with

0.022% standard rennet (e.g. Hansens standard rennet 15,000 units/ml). The coagulation was carried out in apparatus illustrated in the accompanying drawing. The plastics material used was a low density polypropylene one metre wide of 300 gauge film (75 microns). The renneted milk was introduced through pipe 10 onto the U profile of the propylene film and the two sides of the film were then closed together and heat-sealed to give a tube of diameter approximately 0.3 metres. The resulting tube containing the renneted milk was then passed into an air-bath maintained at 31°C. The length of the air-bath, speed of movement of the tube and rate of introduction of the renneted milk through pipe 10 was such that there was substantially no movement of the milk in the tube while the tube was moving through the air-bath and the residence time in the air-bath and the residence time in the air-bath of a point in the tube was about 15 minutes. The tube was then passed to cutter 17 where it was slit open longitudinally to release a continuous strip of coagulum of circular cross-section diameter about 0.3 metres. This coagulum was then cut into cubes approximately 1 cm in each dimension by two sets of fixed orthogonal blades and a third revolving blade and these cubes were then passed to a container where the syneresis and draining step were carried out conventionally. It was found that coagulum of uniform properties was obtained continuously, that there was substantially no difficulty with coagulum adhering to the wall of the plastics tube and that the resulting coagulum had acceptable properties for further processing into cheddar cheese.

Operating in accordance with this procedure enabled five tonnes/hour of the ultra-filtered concentrate to be processed into a cheese containing approximately 60% of the materials present in the original concentrate. In other words, three tonnes of cheese per hour could be produced utilising a total of 67.2 metres of plastics tube.

- 10 -

CLAIMS

1.    Apparatus for processing a coagulating dairy product comprising means for advancing a body of the dairy product during coagulation thereof, characterised by a device (12,14,16) for temporarily encapsulating the moving body of product for a predetermined period whereby coagulation can proceed without relative movement of the coagulating product and the encapsulating material, the device comprising means (12) for supplying disposable sheet material (11) as the encapsulating material, means for enveloping the body of material in the sheet for the duration of the period and means (16) downstream of the enveloping means for removing and disposing of the sheet after the predetermined period.

2.    Apparatus according to claim 1 characterised in that the device comprises means for delivering the sheet (11) material as a flat, horizontal sheet, means downstream thereof for drawing lateral edges of the sheet together to produce an open-topped trough; means (10) for introducing renneted milk into the trough, and means (14) downstream of the trough for sealing lateral edges of the sheet together so as fully to envelop the product.

3.    Apparatus according to claim 1, for use with sheet material stored in concertinaed or coiled form, and characterised by means for opening out or uncoiling the stored sheet material and means for introducing the product into the sheet as it is opened out or uncoiled.

4.    Apparatus according to any one of the preceding claims characterised in that the advancing means (13,18) is arranged so that the tube (15) is inclined downwardly from its upstream to its downstream end.

5.    Apparatus according to any one of the proceeding claims and characterised by heat treatment means for heat treating the body of product during its encapsulation.

6.    Apparatus according to any one of the proceeding claims characterised in that adjacent the sheet removing means, there are means provided to cut coagulated body into sections.

7.    Apparatus according to claim 6, characterised in that the cutting means is arranged to cut the body into longitudinally sequential portions.

8.    A process for the continuous coagulation of protein in milk which comprises introducing a liquid milk containing a protein coagulant for coagulating milk protein into a moving tube, producing a desired temperature profile in the milk by bringing the milk into heat-exchange contact with a heat-exchange medium if necessary and then recovering coagulated protein from the tube, characterised in that the tube moves in a feed direction during said coagulation but there is substantially no movement of the contents of the tube relative to the walls of the tube during the coagulation period.

9.    A process according to claim 9 when carried out using the apparatus of any one of claims 1 to 6, the encapsulating material forming the tube into which the liquid milk containing a protein coagulant is introduced.

10.   A dairy product made using the apparatus of any one of claims 1 to 7 or the process of claim 8 or 9.

European Patent
Office

EUROPEAN SEARCH REPORT

0114753
Application number

EP 84 30 0347

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 491 725 (ALPMA, ALPENLAND MASCHINENBAU HAIN & CO. KG.) *Page 2, lines 8-10; page 3, line 30 - page 5, line 11; figures 1-3* | 1-10 | A 01 J 25/00 A 23 C 19/024 |
| X | DE-A-1 810 154 (NII PO MLETCHNA PROMICHLENOST) *Page 4, paragraph 2; page 5, paragraph 2 - page 6, paragraph 1; figures 1-2* | 1-2,5-10 | |
| A | FR-A-1 244 079 (G. DI GAETANO) | | |

TECHNICAL FIELDS
SEARCHED (Int. Cl. ³)

A 01 J
A 23 C

The present search report has been drawn up for all claims

| Place of search THE HAGUE | Date of completion of the search 26-03-1984 | Examiner NEHRDICH H.J |
|---|---|---|